Europäisches Patentamt

European Patent Office

Office européen des brevets

(19)

(11) Veröffentlichungsnummer : **0 190 635**
**B1**

(12) EUROPÄISCHE PATENTSCHRIFT

(45) Veröffentlichungstag der Patentschrift :
05.04.89

(21) Anmeldenummer : 86101041.1

(22) Anmeldetag : 27.01.86

(51) Int. Cl.⁴ : **H 01 S 3/08**, H 01 S 3/03,
G 02 B 5/28

(54) Gaslaser mit einem frequenzselektiven dielektrischen Schichtensystem.

(30) Priorität : 30.01.85 DE 3503092

(43) Veröffentlichungstag der Anmeldung :
13.08.86 Patentblatt 86/33

(45) Bekanntmachung des Hinweises auf die Patenterteilung : 05.04.89 Patentblatt 89/14

(84) Benannte Vertragsstaaten :
CH DE FR GB IT LI

(56) Entgegenhaltungen :
DE-A- 2 060 525
DE-A- 2 342 911
US-A- 3 815 036
US-A- 4 009 453
THE TRANSACTIONS OF THE IECE OF JAPAN, Band
E-61, Nr. 9, "Abstracts", September 1978, Seiten 758-
759; H. MATSUZAWA et al.: "Wavelength tuning of a
dye laser using a dielectric interference filter- coated
prism"
BELL SYSTEMS TECHNICAL JOURNAL, Band 48, Nr.
5, Mai/Juni 1969, Seiten 1405-1419, New York, US;
P.W. SMITH et al.: "High-power single-frequency
lasers using thin metal film mode-selection filters

(73) Patentinhaber : Siemens Aktiengesellschaft Berlin
und München
Wittelsbacherplatz 2
D-8000 München 2 (DE)

BALZERS AKTIENGESELLSCHAFT

FL-9496 Balzers (LI)

(72) Erfinder : Krüger, Hans, Dipl.-Ing.
Peralohstrasse 13
D-8000 München 83 (DE)
Erfinder : Good, Peter, Dr.
Städli 32
Ch-7320 Sargans (CH)

(74) Vertreter : Mehl, Ernst, Dipl.-Ing.
Postfach 22 13 17
D-8000 München 22 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft einen Gaslaser gemäß dem Oberbegriff des Anspruchs 1. Ein solcher Laser ist beispielsweise aus DE-A-2 342 911 bekannt.

Gaslaser strahlen gewöhnlich auf einer Vielzahl von Wellenlängen. Man muß daher, wenn nur eine einzige Wellenlänge benötigt wird, Vorkehrungen zur Unterdrückung des restlichen Emissionsspektrums treffen. In der eingangs zitierten Offenlegungsschrift wird hierzu vorgeschlagen, einen der beiden Resonatorspiegel folgendermaßen zu beschichten : Vor und hinter einer $\lambda$/2-Schicht befinden sich — in spiegelsymmetrischer Anordnung — mehrere, jeweils aus einer optisch dichten und einer optisch dünnen $\lambda$/4-Schicht gebildete Paare ($\lambda$ = Wellenlänge des störenden Lichts). Ein derartiges Schichtensystem liefert ein ausgeprägtes Reflexionsminimum. Man kann damit aus einer Reihe relativ eng benachbarter Laserlinien ohne weiteres eine bestimmte Linie wegfiltern ; es bereitet aber Schwierigkeiten, umgekehrt aus dem gleichen Spektrum alle Linien bis auf eine zu unterdrücken.

Eine solche Frequenzcharakteristik ließe sich durch eine modifizierte Beschichtung erzielen. Hierfür sind allerdings Schichtengefüge erforderlich, deren Reflexionsmaxima temperatur- und druckabhängig sind, und zwar in einem Ausmaß, das beispielsweise bei einem Art-Laser mit seinen relativ geringen Linienabständen zu spürbaren Leistungseinbußen führt. Weniger kritisch sind die Verhältnisse, wenn man die Linienauswahl durch dielektrische Kantenfilter auf beiden Spiegeln trifft. Dem stehen allerdings höhere Kosten gegenüber : Die Spiegelherstellung ist aufwendig — man muß ein relativ weiches Material mit einer häufig auch noch gekrümmten Oberfläche polieren und beschichten — und führt zu Ausbeuten von deutlich unter 100 %.

Natürlich könnte man mit breitbandigen Spiegeln arbeiten und die Linienauswahl durch Etalons, frequenzselektive Polarisatoren oder dispergierende Elemente besorgen lassen (DE-A-20 60 525 oder GB-A-20 75 746). Zusätzliche Teile im Resonator sollten allerdings nach Möglichkeit vermieden werden, allein schon deshalb, weil sie den Aufbau komplizierter machen und den Strahl schwächen.

Der Erfindung liegt daher die Aufgabe zugrunde, einen Laser der eingangs genannten Art so auszugestalten, daß störende Frequenzanteile des Laserlichts einfach und zuverlässig unterbunden werden. Diese Aufgabe wird erfindungsgemäß durch eine Lasertype mit den Merkmalen des Patentanspruchs 1 gelöst.

Der vorgeschlagene Gaslaser läßt sich relativ kostengünstig fertigen : Zusatzteile sind nicht erforderlich. Das Brewster-Fenster besteht gewöhnlich aus einem harten, gut polierbaren Material (Quarz) mit planen Oberflächen ; es läßt sich also bequem vergüten und beschichten. Die Mehrfachschicht ist aus nur zwei Schichtenarten aufgebaut ; die Schichten dürfen dabei von ihrem Idealwert ((2q + 1)/4)$\lambda$ abweichen, vorausgesetzt, Schichten gleicher Art sind — mit einer Toleranz von einigen % — gleich dick. Hinzukommen bemerkenswerte optische Qualitäten : Verglichen mit einem frequenzselektiven Spiegel sind die Dämpfungswerte beim Nutz- und Störlicht in etwa gleich und die Einflüsse von Temperatur- und Druckänderungen geringer.

Vorteilhafte Ausgestaltungen und Weiterbildungen der Erfindung sind Gegenstand abhängiger Ansprüche.

Der Lösungsvorschlag soll nun anhand eines in der Zeichnung dargestellten Ausführungsbeispiels näher erläutert werden. In den Figuren der Zeichnung sind einander entsprechende Teile mit gleichem Bezugszeichen versehen. Es zeigen

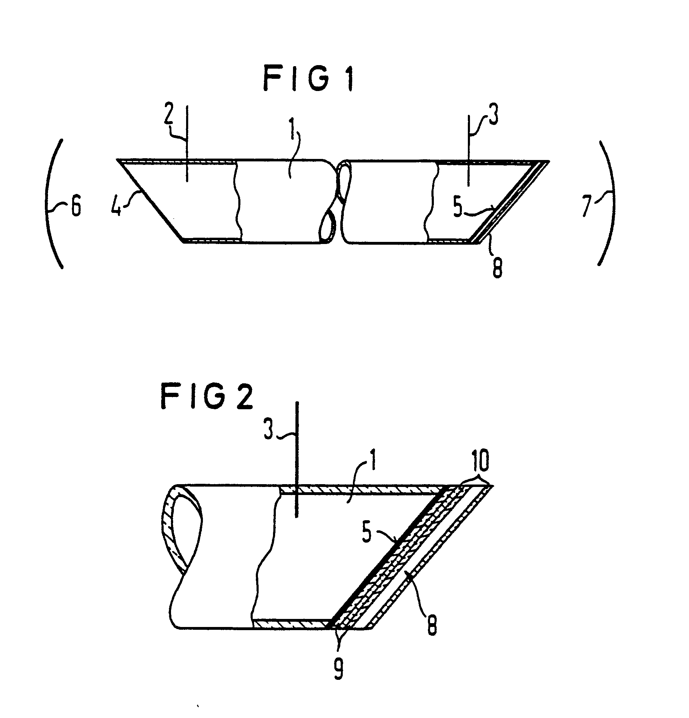

Fig. 1 das Ausführungsbeispiel in einem schematischen Längsschnitt und

Fig. 2 von dem Ausführungsbeispiel der Fig. 1 einen vergrößerten Ausschnitt, mit einer genaueren Darstellung der Mehrfachschicht.

Der dargestellte Laser ist ein Art-Laser, der ausschließlich bei einer Frequenz von 0,488 $\mu$m emittieren soll. Er enthält im einzelnen ein argongefülltes Entladungsrohr 1, das an seinen beiden Enden mit je einer Entladungselektrode 2, 3 versehen ist und durch je ein Brewster-Fenster 4, 5 abgeschlossen wird. Das Rohr befindet sich in einem durch zwei Spiegel 6, 7 gebildeten Resonator.

Das Fenster 5 ist auf seiner dem Spiegel 7 zugewandten Seite mit einer dielektrischen Mehrfachschicht 8 überzogen. Dieses Schichtensystem besteht aus zwölf Einzelschichten 9, 10, die abwechselnd einen Brechungsindex von $n_h$ = 2,2 bzw. $n_l$ = 1,46 haben und 71,2 nm bzw. 120,5 nm dick sind. Sie bestehen aus aufgedampftem $Ta_2O_3$ bzw. $SiO_2$. Die Brewster-Fenster bestehen ebenfalls aus Quarz.

Für die einzelnen Laserlinien $\lambda_i$ mit ihren Anregungswahrscheinlichkeiten A ergeben sich — für p-polarisiertes Licht bei einem Einfallswinkel von 55,5° — folgende Reflexionsfaktoren $R_p$

| $\lambda_i$ (nm) | $R_p$ (%) | A | $\lambda_i$ (nm) | $R_p$ (%) | A |
|---|---|---|---|---|---|
| 454 | 11 | 0.12 | 476 | 7.4 | 0.75 |
| 456 | 12 | 0.35 | 488 | 0.000 | 1.5 |
| 466 | 13 | 0.2 | 496 | 6.8 | 0.7 |
| 473 | 9.7 | 0.3 | 501 | 17.7 | 0.4 |
|  |  |  | 514 | 51 | 2.0 |

Bei Schichtdickenfehlern von ± 1 % und Streulicht- und Absorptionsverlusten von insgesamt < 0,05 % belaufen sich die Verluste bei der 0,488 μm-Linie auf etwa 0,2 %. Die übrigen Laserlinien sind ausgedämpft ; dies gilt insbesondere auch für die an sich stark angeregte 0,514 μm-Linie, weil gerade in diesem Frequenzbereich der $R_p$-Wert besonders hoch ist.

Die Erfindung beschränkt sich nicht nur auf das dargestellte Ausführungsbeispiel. So läßt sich die Mehrfachschicht — in entsprechender Anpassung — für die Selektion anderer Ar⁻-Linien oder Linien anderer (Edel-)Gase und in geeigneten Fällen sogar zur Auswahl von mehr als einer Linie verwenden. Davon abgesehen bleibt es dem Fachmann unbenommen, das Schichtensystem im vorgeschlagenen Rahmen in mehrfacher Hinsicht abzuwandeln : Die niedrig- und/oder hochbrechenden Schichten könnten — beispielsweise zur Steigerung der Selektivität — dicker gewählt werden (q > 1) ; die Mehrfachschicht könnte wenigstens teilweise auf die Innenseite des Brewster-Fensters aufgebracht werden — eine Aufteilung auf beide Fensterseiten kann sich aus Gründen der Thermostabilität empfehlen ; die Schichten lassen sich auch auf andere Weise, beispielsweise durch eine Sputtertechnik, auftragen. Im übrigen ist es ohne Belang, ob das Brewster-Fenster einen gasdichten Rohrabschluß bildet oder rein mechanisch gehalten wird.

**Patentansprüche**

1. Gaslaser, enthaltend
1a) ein Entladungsrohr (1), das
b) zumindest an einem seiner beiden Enden mit einem Brewster-Fenster (4, 5) versehen ist ;
2a) ein frequenzselektives dielektrisches Schichtensystem zur Unterdrückung unerwünschter Laserlinien, mit
b) einer Mehrfachschicht (8) aus mehreren aufeinander folgenden Schichten (9, 10), die alternierend einen hohen Brechungsindex $n_h$ als Schichten erster Art und einen niedrigen Brechungsindex $n_l$ als Schichten zweiter Art aufweisen mit $\Delta n = n_h - n_l \geqslant 0,5$ und die gleiche optische Dicke haben ; dadurch gekennzeichnet, daß
2c) das Schichtensystem auf dem Brewster-Fenster (5) angeordnet ist,
d) ausschließlich aus der Mehrfachschicht (8) besteht,
e) zwischen fünf und neun Schichten (9, 10) jeder Art vorgesehen sind, und daß gilt :

f) $0,98 \ d_{om} \leqslant d_{im} \leqslant 1,02 \ d_{om}$ und $0,8 \ ((2q + 1)/4)\lambda \leqslant d_{om} \leqslant 1,2 \ ((2q + 1)/4)\lambda$, mit

$d_{im}$ = Dicke der i-ten Schicht der m-ten Art, gemessen in Richtung des durchtretenden Lichts ;
q = ganze Zahl $\geqslant 0$ ;
$\lambda$ = Wellenlänge der gewünschten Laserlinie in der jeweiligen Schicht.

2. Laser nach Anspruch 1, dadurch gekennzeichnet, daß gilt :

$$0,99 \ d_{om} \leqslant d_{im} \leqslant 1,01 \ d_{om}$$

und

$$0,9 \ \lambda/4 \leqslant d_{om} \leqslant 1,1 \ \lambda/4.$$

3. Laser nach Anspruch 1 oder 2, dadurch gekennzeichnet, daß die Mehrfachschicht (8) aus höchstens sieben Schichten (9, 10) jeder Art besteht und daß gilt :

$$1,9 \leqslant n_h \leqslant 2,5, \ 1,38 \leqslant n_l \leqslant 1,7 \text{ und } \Delta n \geqslant 0,6.$$

4. Argon-Ionen-Laser nach Anspruch 3, dadurch gekennzeichnet, daß $\lambda = 0,488$ μm, daß die Mehrfachschicht (8) aus mindestens sechs Schichten (9, 10) jeder Art besteht und daß gilt :

$$2,1 \leqslant n_h \leqslant 2,3 \text{ und } 1,4 \leqslant n_l \leqslant 1,5.$$

5. Laser nach Anspruch 4, dadurch gekennzeichnet, daß die Mehrfachschicht (8) aus sechs Schichten (9, 10) jeder Art besteht, daß $n_h$ und $n_l$ Werte von etwa 2,2 bzw. 1,46 haben und daß die Schichten (9, 10) der ersten und zweiten Art etwa 71,2 nm bzw. 120,5 nm dick sind.

6. Laser nach Anspruch 5, dadurch gekennzeichnet, daß die Schichten (9, 10) erster und zweiter Art aus $Ta_2O_3$ bzw. $SiO_2$ bestehen.

7. Laser nach einem der Ansprüche 1 bis 6, dadurch gekennzeichnet, daß sich die Mehrfachschicht (8) auf der Außenseite des Brewster-Fensters (5) befindet.

**Claims**

1. Gas laser, containing
1a) a discharge tube (1) which

3

b) is provided at least on one of its two ends with a Brewster window (4, 5) ;

2a) a frequency-selection dielectric layer system for suppressing undesired laser lines, having

b) a multiple layer (8) of several successive layers (9, 10) which alternately have a high refractive index $n_h$ as layers of the first type and a low refractive index $n_l$ as layers of the second type where $\Delta n = n_h - n_l \geqslant 0.5$ and have the same optical thickness ;

characterized in that

2c) the layer system is arranged on the Brewster window (5),

d) consists exclusively of the multiple layer (8),

e) between five and nine layers (9, 10) of each type are provided, and in that the following applies :

f) $0.98\ d_{om} \leqslant d_{im} \leqslant 1.02\ d_{om}$ and $0.8\ ((2q + 1)/4)\lambda \leqslant d_{om}\ 1.2\ ((2q + 1)/4)\lambda$, where

$d_{im}$ = thickness of the ith layer of the mth type, measured in the direction of the light coming through ;

$q$ = integer $\geqslant 0$ ;

$\lambda$ = wavelength of the desired laser line in the respective layer.

2. Laser according to Claim 1, characterized in that the following applies :

$$0.99\ d_{om} \leqslant d_{im} \leqslant 1.01\ d_{om}$$

and

$$0.9\ \lambda/4 \leqslant d_{om} \leqslant 1.1\ \lambda/4.$$

3. Laser according to Claim 1 or 2, characterized in that the multiple layer (8) consists of at most seven layers (9, 10) of each type and that the following applies :

$$1.9 \leqslant n_h \leqslant 2.5,\ 1.38 \leqslant n_l \leqslant 1.7\ \text{and}\ \Delta n \geqslant 0.6.$$

4. Argon-ion laser according to Claim 3, characterized in that $\lambda = 0.488\ \mu m$, in that the multiple layer (8) consists of at least six layers (9, 10) of each type and in that the following applies :

$$2.1 \leqslant n_h \leqslant 2.3\ \text{and}\ 1.4 \leqslant n_l \leqslant 1.5.$$

5. Laser according to Claim 4, characterized in that the multiple layer (8) consists of six layers (9, 10) of each type, in that $n_h$ and $n_l$ have values of approximately 2.2 and 1.46 respectively and in that the layers (9, 10) of the first and second type are approximately 71.2 nm and 120.5 nm thick respectively.

6. Laser according to Claim 5, characterized in that the layers (9, 10) of the first and second type consist of $Ta_2O_3$ and $SiO_2$ respectively.

7. Laser according to one of Claims 1 to 6, characterized in that the multiple layer (8) is located on the outer side of the Brewster window (5).

**Revendications**

1. Laser à gaz comportant

1a) un tube à décharge (1), qui

b) est pourvue au moins sur l'une de ses extrémités, une fenêtre de Brewster (4, 5) ;

2a) un système diélectrique à couches, sélectif du point de vue de la fréquence et servant à supprimer les raies laser indésirables, et comportant

b) une couche multiple (8) formée de plusieurs couches successives (9, 10) qui possèdent en alternance un indice de réfraction élevé ($n_h$), sous la forme de couches d'un premier type, et un faible indice de réfraction $n_l$, sous la forme de couches d'un second type, avec $\Delta n = n_h - n_l \geqslant 0,5$ et possèdent la même épaisseur optique ;

caractérisé par le fait que

2c) le système à couches est disposé sur la fenêtre de Brewster (5),

d) est constitué exclusivement par la couche multiple (8),

e) il est prévu entre 5 et 9 couches (9, 10) de chaque type, et on a :

f) $0.98\ d_{om} \leqslant d_{im} \leqslant 1,02\ d_m$ et $0,8\ ((2q + 1)/4)\lambda \leqslant d_{om} \leqslant 1,2\ ((2q + 1)/4)\lambda$, avec

$d_{im}$ = épaisseur de la i-ème couche du m-ème type, mesurée dans la direction de la lumière passante ;

$q$ = nombre entier $\geqslant 0$ ;

$\lambda$ = longueur d'onde de la raie laser désirée dans la couche respective.

2. Laser suivant la revendication 1, caractérisé par le fait qu'on a :

**EP 0 190 635 B1**

$$0,99\ d_{om} \leqslant d_{im} \leqslant 1,01\ d_{om}$$

et

$$0,9\ \lambda/4 \leqslant d_{om} \leqslant 1,1\ \lambda/4.$$

3. Laser suivant la revendication 1 ou 2, caractérisé par le fait que la couche multiple de type (8) est constituée par au maximum sept couches (9, 10) de chaque type, et qu'on a :

$$1,9 \leqslant n_h \leqslant 2,5,\ 1,38 \leqslant n_l \leqslant 1,7\ \text{et}\ \Delta n \geqslant 0,6.$$

4. Laser à ions d'argon suivant la revendication 3, caractérisé par le fait qu'on a $\lambda = 0,488\ \mu m$, que la couche multiple (8) est constituée par au moins six couches (9, 10) de chaque type et qu'on a :

$$2,1 \leqslant n_h \leqslant 2,3\ \text{et}\ 1,4 \leqslant n_l \leqslant 1,5.$$

5. Laser suivant la revendication 4, caractérisé par le fait que la couche multiple (8) est constituée par six couches (9, 10) de chaque type, que $n_h$ et $n_l$ possèdent des valeurs égales à environ 2,2 et 1,46 et que les couches (9, 10) des premier et second types possèdent des épaisseurs égales approximativement à 71,2 nm et 120,5 nm.

6. Laser suivant la revendication 5, caractérisé par le fait que les couches (9, 10) des premier et second types sont constituées par du $Ta_2O_3$ et du $SiO_2$.

7. Laser suivant l'une des revendications 1 à 6, caractérisé par le fait que la couche multiple (8) est située sur la face extérieure de la fenêtre de Brewster (5).

# FIG 1

# FIG 2